(19) Europäisches Patentamt
European Patent Office
Office européen des brevets

(11) **EP 3 975 059 A1**

(12) **EUROPEAN PATENT APPLICATION**

(43) Date of publication:
**30.03.2022 Bulletin 2022/13**

(21) Application number: **21196471.3**

(22) Date of filing: **14.09.2021**

(51) International Patent Classification (IPC):
**G06N 3/04** (2006.01)       **G06N 3/08** (2006.01)
**G06N 5/00** (2006.01)

(52) Cooperative Patent Classification (CPC):
**G06N 3/0454; G06N 3/0427; G06N 3/08;**
G06N 20/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2020   US 202017033474**

(71) Applicant: **Facebook, Inc.**
**Menlo Park, CA 94025 (US)**

(72) Inventors:
• **Li, Yilei**
  **Menlo Park (US)**
• **Wang, Yue**
  **Menlo Park (US)**
• **Chuang, Pierce I-Jen**
  **Menlo Park (US)**

(74) Representative: **Murgitroyd & Company**
**Murgitroyd House**
**165-169 Scotland Street**
**Glasgow G5 8PL (GB)**

(54) **DYNAMICALLY SELECTING NEURAL NETWORKS FOR DETECTING PREDETERMINED FEATURES**

(57)    In one embodiment, a method includes receiving an input for a machine-learning model configured to detect a plurality of predetermined features, the machine-learning model including at least a first neural network configured to detect a first subset of the plurality of predetermined features and a second neural network configured to detect a second subset of the plurality of predetermined features, generating a detection result by processing the input using the first neural network, determining that the input includes a feature in the first subset of the plurality of predetermined features based on the detection result and one or more detection criteria, and outputting the detection result as an output of the machine-learning model without using the second neural network to process the input in response to the determination.

FIG. 3

EP 3 975 059 A1

## Description

### TECHNICAL FIELD

This disclosure generally relates to databases and file management within network environments, and in particular relates to hardware and software for data analysis using machine-learning models.

### BACKGROUND

Artificial neural networks (ANNs), usually simply called neural networks (NNs), are computing systems vaguely inspired by the biological neural networks that constitute animal brains. An ANN is based on a collection of connected units or nodes called artificial neurons, which loosely model the neurons in a biological brain. Each connection, like the synapses in a biological brain, can transmit a signal to other neurons. An artificial neuron that receives a signal then processes it and can signal neurons connected to it. The "signal" at a connection is a real number, and the output of each neuron is computed by some non-linear function of the sum of its inputs. The connections are called edges. Neurons and edges typically have a weight that adjusts as learning proceeds. The weight increases or decreases the strength of the signal at a connection. Neurons may have a threshold such that a signal is sent only if the aggregate signal crosses that threshold. Typically, neurons are aggregated into layers. Different layers may perform different transformations on their inputs. Signals travel from the first layer (the input layer), to the last layer (the output layer), possibly after traversing the layers multiple times.

In computer science, program optimization or software optimization is the process of modifying a software system to make some aspect of it work more efficiently or use fewer resources. In general, a computer program may be optimized so that it executes more rapidly, or to make it capable of operating with less memory storage or other resources. Optimization may occur at a number of levels. Typically, the higher levels may have greater impact and may be harder to change later on in a project, requiring significant changes or a complete rewrite if they need to be changed. Thus, optimization may typically proceed via refinement from higher to lower, with initial gains being larger and achieved with less work, and later gains being smaller and requiring more work. However, in some cases overall performance may depend on performance of very low-level portions of a program, and small changes at a late stage or early consideration of low-level details may have outsized impact. Typically, major optimization may be often considered a refinement to be done late, if ever. On longer-running projects there may be typically cycles of optimization, where improving one area reveals limitations in another, and these are typically curtailed when performance is acceptable, or gains become too small or costly.

## SUMMARY OF PARTICULAR EMBODIMENTS

Accordingly, the present in invention is directed to methods, systems and computer readable storage media according to the appended claims.

In particular embodiments, a computing system may reduce the overall computation needed for detecting predetermined features by splitting the desired capabilities of a large neural network among multiple smaller neural networks and use the smaller neural networks sequentially as needed. If the earlier executed network provides adequate results, the later networks in the sequence may be skipped, thereby saving power and computational resources. The computing system may use the aforementioned approach in different tasks when there are confidence scores associated with the output of the neural network, such as classification, object detection with bounding boxes, image segmentation, etc. Taking classification as an example, instead of using just one large neural network for good accuracy over all classes, the computing system may use one detector to monitor the output of a smaller neural network to decide whether to call another neural network. To train such multi-network structure, the classes may be first divided into different groups, each group being assigned to a neural network for handling. The complexity of the neural network (i.e., small versus large) may depend on the classification capability associated with the group of classes. As an example and not by way of limitation, a group of easy classes may need a small neural network whereas a group of difficult classes may require a large neural network. In one example, when receiving an input data, the computing system may use small neural networks to classify it against these easy classes. Based on the output of the small networks, the computing system may use a detector to determine if a next-level neural network (e.g., large neural network) should be called to perform further classification. The computing system may use a mixed network architecture based on both hierarchy and capability, in which the hierarchy separates multiple neural networks based on a high-level detection goal and the capability separates multiple neural networks based on a more fine-grained detection goal. Although this disclosure describes performing particular inferences by splitting particular neural networks by particular systems in a particular manner, this disclosure contemplates splitting any suitable neural network by any suitable system in any suitable manner.

In particular embodiments, a computing system may receive an input for a machine-learning model configured to detect a plurality of predetermined features. The machine-learning model may comprise at least a first neural network configured to detect a first subset of the plurality of predetermined features and a second neural network configured to detect a second subset of the plurality of predetermined features. The computing system may then generate a detection result by processing the input using the first neural network. In particular embodiments, the computing system may determine, based on the detection result and one or more detection criteria, that the input includes a feature in the first subset of the plurality of predetermined features. In response to the determination, the computing system may output the detection result as an output of the machine-learning model without using the second neural network to process the input.

In an aspect, the present invention is directed to a method comprising, by one or more computing systems:

receiving an input for a machine-learning model configured to detect a plurality of predetermined features, the machine-learning model comprising at least a first neural network configured to detect a first subset of the plurality of predetermined features and a second neural network configured to detect a second subset of the plurality of predetermined features;

generating a detection result by processing the input using the first neural network;

determining, based on the detection result and one or more detection criteria, that the input includes a feature in the first subset of the plurality of predetermined features; and

in response to the determination, outputting the detection result as an output of the machine-learning model without using the second neural network to process the input.

In an embodiment of the method according to the present invention, a complexity associated with the second neural network may be higher than a complexity associated with the first neural network.

In an embodiment of the method according to the present invention the input may comprise one or more of a text, an audio clip, an image, or a video clip.

In an embodiment of the method according to the present invention, each of the plurality of predetermined features may comprise one or more of a class, a segmentation, or a bounding box.

In an embodiment of the method according to the present invention, the first subset of features of the plurality of predetermined features may be associated with a first set of classes, and the second subset of the plurality of predetermined features may be associated with a second set of classes.

In an embodiment of the method according to the present invention, the first subset of features of the plurality of predetermined features are associated with a first set of segmentations, and wherein the second subset of the plurality of predetermined features are associated with a second set of segmentations.

The method of Claim 1, wherein the first subset of features of the plurality of predetermined features may be associated with a first set of bounding boxes, and the second subset of the plurality of predetermined features may be associated with a second set of bounding boxes.

In an embodiment of the method according to the present invention, the detection result may comprise one or more confidence scores associated with the plurality of predetermined features. In addition thereto, the method may further comprise ranking the one or more confidence scores, wherein the one or more detection criteria are based on a comparison of a top-ranked confidence score of the one or more confidence scores and a predetermined threshold score. Alternatively the method may further comprise ranking the one or more confidence scores, wherein the one or more detection criteria are based on a comparison of a top-ranked confidence score and at least a second-ranked confidence score. Alternatively, the method may further comprise generating one or more intermediate embeddings of the input by processing the input using the first neural network, wherein determining that the input includes the feature in the first subset of the plurality of predetermined features is further based on another machine-learning model configured to process one or more of the one or more confidence scores or the one or more intermediate embeddings.

In an embodiment of the method according to the present invention, the first subset of the plurality of predetermined features may have a higher probability of being included in inputs of the machine-learning model than the second subset of the plurality of predetermined features.

In an embodiment of the method according to the present invention, the method may further comprise training the machine-learning model, wherein the training may comprise:

accessing a plurality of training data associated with the plurality of predetermined features;

dividing the plurality of training data into two or more sets of training data based on the plurality of predetermined features; and

training a plurality of neural networks comprising at least the first neural network and the second neural network based on the two or more of sets of training data. In addition thereto, dividing the plurality of training data may comprise clustering the plurality of training data into the two or more sets of training data based on similarity between the plurality of training data. Alternatively, dividing the plurality of training data may be based on detection-capability associated with the plurality of predetermined features. Alternatively, dividing the plurality of training data may comprises:

determining detection-hierarchy of the plurality of predetermined features; and

dividing the plurality of training data into the two or more sets of training data based on the detection-hierarchy.

In an aspect, the present invention is directed to one or more computer-readable non-transitory storage media embodying software that is operable when executed to perform the methods as described above or to:

receive an input for a machine-learning model configured to detect a plurality of predetermined features, the machine-learning model comprising at least a first neural network configured to detect a first subset of the plurality of predetermined features and a second neural network configured to detect a second subset of the plurality of predetermined features; generate a detection result by processing the input using the first neural network; determine, based on the detection result and one or more detection criteria, that the input includes a feature in the first subset of the plurality of predetermined features; and in response to the determination, output the detection result as an output of the machine-learning model without using the second neural network to process the input.

In an aspect, the present invention is further directed to a system comprising: one or more processors; and a non-transitory memory coupled to the processors comprising instructions executable by the processors, the processors operable when executing the instructions to perform the method as described above or to:

receive an input for a machine-learning model configured to detect a plurality of predetermined features, the machine-learning model comprising at least a first neural network configured to detect a first subset of the plurality of predetermined features and a second neural network configured to detect a second subset of the plurality of predetermined features; generate a detection result by processing the input using the first neural network; determine, based on the detection result and one or more detection criteria, that the input includes a feature in the first subset of the plurality of predetermined features; and in response to the determination, output the detection result as an output of the machine-learning model without using the second neural network to process the input.

The embodiments disclosed herein are only examples, and the scope of this disclosure is not limited to them. Particular embodiments may include all, some, or none of the components, elements, features, functions, operations, or steps of the embodiments disclosed herein. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

BRIEF DESCRIPTION OF THE DRAWINGS

FIG. 1 illustrates an example workflow for dynamically selecting neural networks for detecting predetermined features.
FIG. 2 illustrates an example method for dynamically selecting neural networks for detecting predetermined features.
FIG. 3 illustrates an example artificial neural network.
FIG. 4 illustrates an example computer system.

DESCRIPTION OF EXAMPLE EMBODIMENTS

In particular embodiments, a computing system may reduce the overall computation needed for detecting predetermined features by splitting the desired capabilities of a large neural network among multiple smaller neural networks and use the smaller neural networks sequentially as needed. If the earlier executed network provides adequate results, the later networks in the sequence may be skipped, thereby saving power and computational resources. The computing system may use the aforementioned approach in different tasks when there are confidence scores associated with the output of the neural network, such as classification, object detection with bounding boxes, image segmentation, etc. Taking classification as an example, instead of using just one large neural network for good accuracy over all classes, the computing system may use one detector to monitor the output of a smaller neural network to decide whether to call another neural network. To train such multi-network structure, the classes may be first divided into different groups, each group being assigned to a neural network for handling. The complexity of the neural network (i.e., small versus large) may depend on the classification capability associated with the group of classes. As an example and not by way of limitation, a group of easy classes may need a small neural network whereas a group of difficult classes may require a large neural network. In one example, when receiving an input data, the computing system may use small neural networks to classify it against these easy classes. Based on the output of the small networks, the computing system may use a detector to determine if a next-level neural network (e.g., large neural network) should be called to perform further classification. The computing system may use a mixed network architecture based on both hierarchy and capability, in which the hierarchy separates multiple neural networks based on a high-level detection goal and the capability separates multiple neural networks based on a more fine-grained detection goal. Although this disclosure describes performing particular inferences by splitting particular neural networks by particular systems in a particular manner, this disclosure contemplates splitting any suitable neural network by any suitable system in any suitable manner.

In particular embodiments, a computing system may receive an input for a machine-learning model configured to detect a plurality of predetermined features. The machine-learning model may comprise at least a first neural network configured to detect a first subset of the plurality of predetermined features and a second neural network configured to detect a second subset of the plurality of predetermined features. The computing system may then generate a detection result by processing the input using the first neural network. In particular embodiments, the computing system may determine, based on the detection result and one or more detection criteria, that the input includes a feature in the first subset of the plurality of predetermined features. In response to the determination, the computing system may output the detection result as an output of the machine-learning model without using the second neural network to process the input.

For neural-network based machine-learning model, one may need to determine the tradeoff between the size of the neural network and the model accuracy. As an example and not by way of limitation, if the accuracy is to be increased by 1%, the size of the neural network may require twice the computation. High computational cost is undesired if the computation is carried out on compact client devices such as AR/VR glasses. In addition, these client devices may be used for a long period, e.g., 24 hours per day, which may also require efficient computation to save battery. To address the aforementioned issues, it may be important to be able to detect predetermined features using smaller neural networks that can also guarantee good accuracy. Accordingly, a computing system may use multiple neural networks in series to detect predetermined features. As an example and not by way of limitation, for a multi-class classification problem, each neural network may handle a set of classes and its output may be monitored to determine if additional neural networks should be needed to complete the classification.

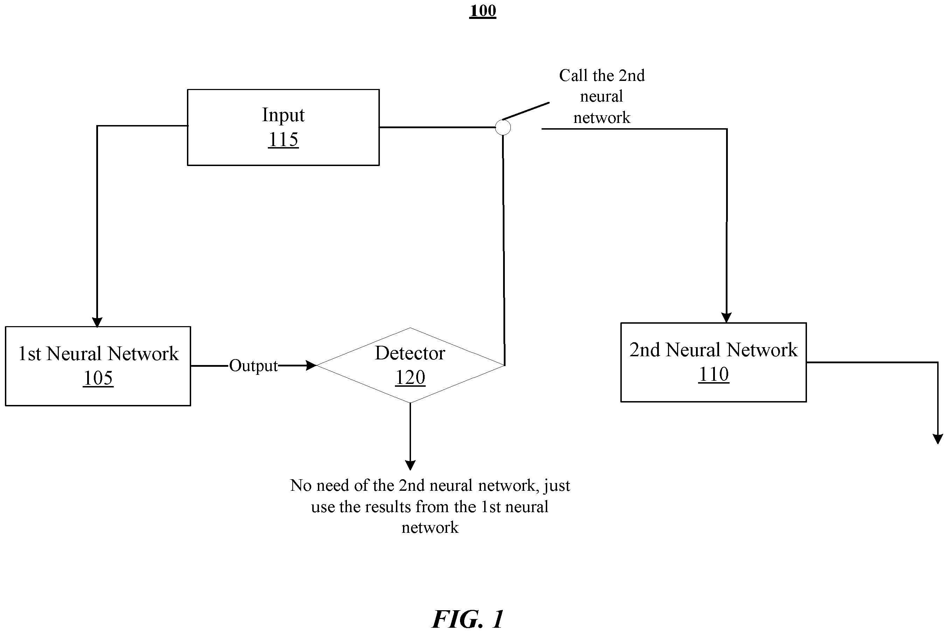

FIG. 1 illustrates an example workflow 100 for dynamically selecting neural networks for detecting predetermined features. In particular embodiments, each of the plurality of predetermined features may comprise one or more of a class, a segmentation, or a bounding box. The computing system may use a machine-learning model that dynamically selects different neural networks to address the aforementioned tradeoff issue when detecting predetermined features. The machine-learning model may be based on multiple small neural networks with each being responsible for a subset of features. In particular embodiments, the first subset of the plurality of predetermined features may have a higher probability of being included in inputs of the machine-learning model than the second subset of the plurality of predetermined features. As an example and not by way of limitation, the first subset of features of the plurality of predetermined features may be associated with a first set of classes and the second subset of the plurality of predetermined features may be associated with a second set of classes. As another example and not by way of limitation, the first subset of features of the plurality of predetermined features may be associated with a first set of segmentations and the second subset of the plurality of predetermined features may be associated with a second set of segmentations. As yet another example and not by way of limitation, the first subset of features of the plurality of predetermined features may be associated with a first set of bounding boxes and the second subset of the plurality of predetermined features may be associated with a second set of bounding boxes.

Taking classifying four classes (e.g., human, pet, car, and other) as an example, the computing system may perform classification using the machine-learning model as follows. The output of each neural network may be classification result in terms of confidence score for each class. As an example and not by way of limitation, a first neural network 105 may be responsible for classifying human and pet whereas a second neural network 110 may be responsible for classifying car and non-car. In particular embodiments, a complexity associated with the second neural network may be higher than a complexity associated with the first neural network. When receiving an input testing data 115, the computing system may use the first neural network 105 first to classify the input testing data. In particular embodiments, the input 115 may comprise one or more of a text, an audio clip, an image, or a video clip. The output of the first neural network 105 may be evaluated by a detector 120. Based on the evaluation, the detector 120 may determine whether to call the second neural network 110. If the detector 120 determines to call the second neural network 110, the computing system may use the second neural network 110 to classify the input testing data 115. The output of the second neural network 110 may be the final classification result. If the detector 120 determines not to call the second neural network 110, the computing system may use the output from the first neural network 105 as the final classification result.

In particular embodiments, the computing system may determine which neural network to select based on different criteria. In particular embodiments, the computing system may select different neural networks based on capability requirements, e.g., size of different neural networks. Continuing with the previous example of classifying human, pet, car, and other, and assuming the first neural network 105 is smaller than the second network, the computing system may first run the first neural network 105 on testing data for classification. If the first neural network 105 has high confidence scores with its classification results, there may be no need for using the second neural network 110 and the output from the first neural network 105 may be used as the final classification result. If the first neural network 105 has low confidence scores, the computing system may further use the second neural network 110 to perform classification. Regarding computational efficiency, supposing the input data 115 is equally possible for these four classes and each neural network needs 5 seconds (s) to run, it may cost 5s latency for the first neural network 105 to classify human and pet and 10s latency for the second neural network 110 to classify and car and other. As a result, the average latency may be 5*0.25+5*0.25+10*0.25+10*0.25 = 7.5s. If there are even more input data 115 are associated with human and pet, the latency may be further reduced. Although this disclosure describes selecting particular neural networks by particular systems in a particular manner, this disclosure contemplates selecting any suitable neural network by any suitable system in any suitable manner.

In particular embodiments, the computing system may select different neural networks based on the nature of the expected input data 115, regardless of the capability requirements. Continuing with the previous example, if the expected input data 115 has an 80% chance of including cars and 20% chance of including human, the computing system may run the second neural network 110 first even if it is larger than the first neural network 105. However, if the expected input data 115 contains 50% human and 50% cars, the computing system may run the first neural network 105 first for computational efficiency. Although this disclosure describes selecting particular neural networks by particular systems in a particular manner, this disclosure contemplates selecting any suitable neural network by any suitable system in any suitable manner.

In particular embodiments, the computing system may select different neural networks based on the difficulty of detecting the predetermined features by a neural network. Taking classification as an example, three vehicle classes, e.g., car, truck, and tank, may be easy to classify, whereas cat and tiger may be difficult to classify. For the class of human, most of them may be easy to classify, but there may be some input testing data where human is difficult to classify, e.g., human in tiger costume. As a result, the computing may select a small neural network to classify car, truck, tank, human and other, and a large neural network to classify cat, tiger and also human. As can be seen, there may be an overlap between classes of the two neural networks. When the input testing data 115 is associated with a difficult human classification case (e.g., human in tiger costume), the computing system may need the large neural network to make the correct classification, but otherwise the small neural network may be able to handle easy human classifications.

In particular embodiments, the computing system may select different neural networks based on how refined the detection goal is. As an example and not by way of limitation, a first neural network 105 may be targeting the class of pet and a second neural network 110 may be targeting the class of dog. If the detection goal is just to detect if there is a pet in the input testing data 115, the computing system may select the first neural network 105 and use the output of the first neural network 105 as the classification result. If the detection goal is to detect if there is a dog in the input testing data 115, the computing system may first select the first neural network 105 to identify all the input testing data 115 that contain a dog. The computing system may then select the second neural network 110 to classify the identified input testing data 115 that contain a dog. Although this disclosure describes selecting particular neural networks by particular systems in a particular manner, this disclosure contemplates selecting any suitable neural network by any suitable system in any suitable manner.

In particular embodiments, the computing system may use a detector 120 to determine whether to select a second neural network 110 after using a first neural network 105 for detecting predetermined features. Different approaches may be used to implement the detector 120. In particular embodiments, the detection result may comprise one or more confidence scores associated with the plurality of predetermined features. The first approach may be implementing the detector 120 based on top-1 score threshold. In particular embodiments, the computing system may rank the one or more confidence scores. The one or more detection criteria may be then based on a comparison of a top-ranked confidence score of the one or more confidence scores and a predetermined threshold score. Specifically, the detector 120 may evaluate the top-1 confidence score of the output of the first neural network 105. If the top-1 confidence score is greater than a predetermined threshold, the detector 120 may determine the output of the first neural network 105 as the final detection result. If the top-1 confidence score is smaller than the predetermined threshold, the detector 120 may determine to call the second neural network 110. In particular embodiments, the second approach may be implementing the detector 120 based on score difference between the top-1 result and the top-*n* (*n* may be 2, 3, etc. determined based on empirical analysis, experimental results, or any suitable method) result. In other words, the computing system may rank the one or more confidence scores. The one or more detection criteria may be then based on a comparison of a top-ranked confidence score and at least a second-ranked confidence score. As an example and not by way of limitation, if the top-1 result has a 0.9 confidence score and the top-2 result has a 0.1 confidence score, their large difference may indicate high confidence of the first neural network 105. As a result, the detector 120 may determine not to call the second neural network 110. If both top-1 and top-2 results have similar confidence scores (e.g., both are 0.7), their small difference may indicate low confidence of the first neural network 105. As a result, the detector 120 may determine to call the second neural network 110. In particular embodiments, the third approach may be training a detector 120 (e.g., based on neural networks) to determine whether the output of the first neural network 105 is correct. The computing system may generate one or more intermediate embeddings of the input 115 by processing the input 115 using the first neural network 105. Accordingly, determining that the input 115 includes the feature in the first subset of the plurality of predetermined features may be further based on another machine-learning model configured to process one or more of the one or more confidence scores or the one or more intermediate embeddings. If the output of the first neural network 105 is determined to be incorrect, the trained detector 120 may determine to call the second neural network 110. As an example and not by way of limitation, the training may take the top-n classification scores from the first neural network 105 or the intermediate embeddings of the first neural network 105 as input for training the detector 120. Although this disclosure describes implementing particular detectors by particular systems in a particular manner, this disclosure contemplates implementing any suitable detector by any suitable system in any suitable manner.

In particular embodiments, the computing system may train the machine-learning model that dynamically selects different neural networks. The computing system may access a plurality of training data associated with the plurality of predetermined features. Taking classifying four classes (e.g., human, pet, car, and other) as an example, the training process may be illustrated as follows. The computing system may train multiple neural networks with each being responsible for a subset of classes. The output of each neural network may be classification result in terms of confidence score for each subset of classes. As an example and not by way of limitation, a first neural network 105 may be responsible for classifying human and pet whereas a second neural network 110 may be responsible for classifying car and non-car. In particular embodiments, the computing system may train each of the multiple neural networks separately. In particular embodiments, the computing system may train the multiple neural networks in an end-to-end fashion. As an example and not by way of limitation, during the training, once the parameters of the first neural network 105 are determined, the computing system may freeze these parameters, feed the training data of the first neural network 105 and the output of the first neural network 105 together into the second neural network 110 to train the second neural network 110. Although this disclosure describes training particular neural network models by particular systems in a particular manner, this disclosure contemplates training any suitable neural network model by any suitable system in any suitable manner.

To begin with the training of the machine-learning model, the computing system may determine efficient divisions for the inference tasks including classification, segmentation, detection, etc. In particular embodiments, the computing system may divide the plurality of training data into two or more sets of training data based on the plurality of predetermined features. The computing system may further train a plurality of neural networks comprising at least the first neural network 105 and the second neural network 110 based on the two or more of sets of training data. Taking classification as an example, the computing system may use a plurality of approaches to determine the divisions for classification. In particular embodiments, the first approach may be dividing the classes according to class similarity. Dividing the plurality of training data may comprise clustering the plurality of training data into the two or more sets of training data based on similarity between the plurality of training data. As an example and not by way of limitation, the computing system may have one neural network to classify cat, dog, and human, and have another neural network to classify vehicles such as car, truck, and tank. To do so, the computing system may use another machine-learning model (e.g., another neural network) to process the training data from these classes. For each training data, the computing system may generate an embedding for it. The computing system may then process (e.g., average) all the embeddings for each class. As a result, the number of the total embeddings may equal to the number of the total classes. The computing system may further compare these embeddings to determine which classes belong to the same cluster (e.g., based on distances between them). Each cluster of classes may be then assigned to a respective neural network for classification. Although this disclosure describes determining particular divisions by particular systems in a particular manner, this disclosure contemplates determining any suitable division by any suitable system in any suitable manner.

In particular embodiments, dividing the plurality of training data may be based on detection-capability associated with the plurality of predetermined features, e.g., how difficult to detect the predetermined features. Continuing with classification as an example, the capability may be determined based on both the training data and the classes themselves. In particular embodiments, the computing system may perform classification on the training data and rely on the output distribution of the classification results to evaluate which classes are easy and which classes are difficult. If the output distribution of one class is associated with low confidence scores, this class may be a difficult class, and vice versa. The computing system may then divide classes accordingly. Although this disclosure describes determining particular divisions by particular systems in a particular manner, this disclosure contemplates determining any suitable division by any suitable system in any suitable manner.

In particular embodiments, the computing system may determine efficient divisions according to hierarchy. Specifically, dividing the plurality of training data may comprise determining detection-hierarchy of the plurality of predetermined features and dividing the plurality of training data into the two or more sets of training data based on the detection-hierarchy. As an example and not by way of limitation, hierarchy may indicate that a first neural network 105 corresponds to a higher-level detection task whereas a second neural network 110 corresponds to a lower-level, fine-grained detection task. The size of the first neural network 105 or the second neural network 110 may vary depending on specific detection tasks, e.g., the first neural network 105 may be small whereas the second neural network 110 may be large. Taking classification as an example, the computing system may use a small neural network for the classes of animal and vehicle (e.g., genus class), a first large neural network for the classes of car, dog, and human (e.g., species classes within the animal genus class), and a second large neural network for the classes of car, truck, and tank (e.g., species classes within the vehicle genus class). Based on the output of the small neural network, the computing system may use either the first large neural network or the second large neural network to get final fine-grained result. As an example and not by way of limitation, if the output of the small neural network indicates high confidence for the class of animal, the computing system may further select the first large neural network to further classify the input testing data 115. As another example and not by way of limitation, if the output of the small neural network indicates high confidence for the class of vehicle, the computing system may further select the second large neural network to further classify the input testing data 115. Although this disclosure describes determining particular divisions by particular systems in a particular manner, this disclosure contemplates determining any suitable division by any suitable system in any suitable manner.

In particular embodiments, the computing system may determine efficient divisions based on a mixture of the similarity-based division, the capability-based division and the hierarchy-based division. Continuing with classification as an example, the computing system may use a first neural network for the classes of animal and vehicle, a second neural network for the classes of cat, dog, and human, and a third neural network for the classes of car, truck, and tank. As cat and dog are more similar than cat with human or dog with human, there may be one neural network for the classes of cat and dog and another neural network for the class of human within the second neural network. As classifying car and truck may similarly require less computation than classifying tank, there may be one small neural network for the classes of car and truck and one large neural network for the class of tank within the third neural network. Although this disclosure describes determining particular divisions by particular systems in a particular manner, this disclosure contemplates determining any suitable division by any suitable system in any suitable manner.

In particular embodiments, the computing system may dynamically use multiple neural networks in series at different levels for various detection tasks that involve neural networks outputting confidence scores. As an example and not by way of limitation, the computing system may dynamically use multiple neural networks in series for object detection with bounding boxes as follows. For a capability-based division, the computing system may first use a small neural network to identify easy bounding boxes and then use a large neural network to identify difficult bounding boxes. For a hierarchy-based division, the computing system may use a small neural network to first determine whether there is an object in a bounding box. The bounding boxes containing objects may be fed into a large neural network, which determines what object (i.e., class) is in each bounding box. Although this disclosure describes using multiple neural networks for particular inference tasks by particular systems in a particular manner, this disclosure contemplates using multiple neural networks for any suitable inference task by any suitable system in any suitable manner.

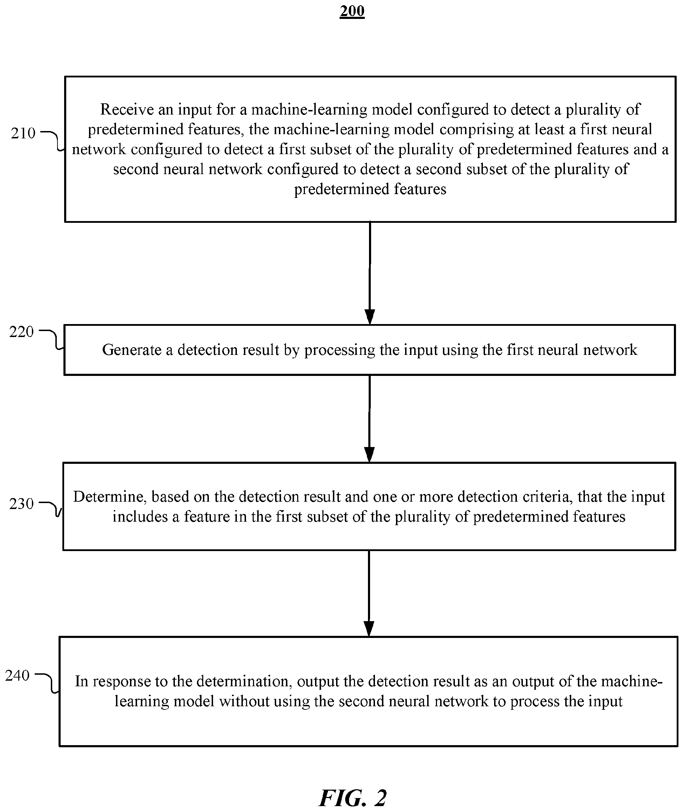

FIG. 2 illustrates an example method 200 for dynamically selecting neural networks for detecting predetermined features. The method may begin at step 210, where the computing system 140 may receive an input for a machine-learning model configured to detect a plurality of predetermined features, the machine-learning model comprising at least a first neural network configured to detect a first subset of the plurality of predetermined features and a second neural network configured to detect a second subset of the plurality of predetermined features. At step 220, the computing system 140 may generate a detection result by processing the input using the first neural network. At step 230, the computing system 140 may determine, based on the detection result and one or more detection criteria, that the input includes a feature in the first subset of the plurality of predetermined features. At step 240, the computing system 140 may, in response to the determination, output the detection result as an output of the machine-learning model without using the second neural network to process the input. Particular embodiments may repeat one or more steps of the method of FIG. 2, where appropriate. Although this disclosure describes and illustrates particular steps of the method of FIG. 2 as occurring in a particular order, this disclosure contemplates any suitable steps of the method of FIG. 2 occurring in any suitable order. Moreover, although this disclosure describes and illustrates an example method for dynamically selecting neural networks for detecting predetermined features including the particular steps of the method of FIG. 2, this disclosure contemplates any suitable method for dynamically selecting neural networks for detecting predetermined features including any suitable steps, which may include all, some, or none of the steps of the method of FIG. 2, where appropriate. Furthermore, although this disclosure describes and illustrates particular components, devices, or systems carrying out particular steps of the method of FIG. 2, this disclosure contemplates any suitable combination of any suitable components, devices, or systems carrying out any suitable steps of the method of FIG. 2.

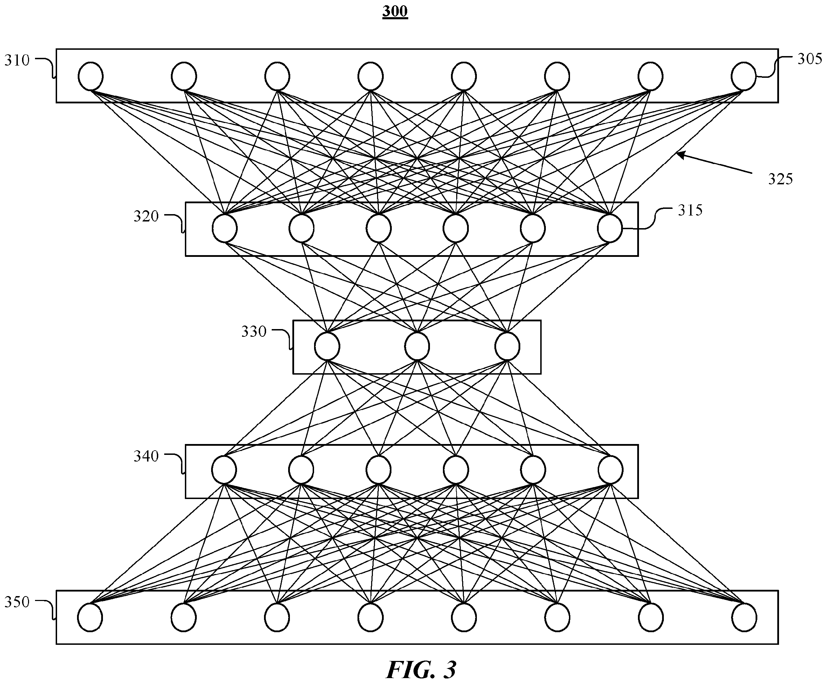

**FIG. 3** illustrates an example artificial neural network ("ANN") 300. In particular embodiments, an ANN may refer to a computational model comprising one or more nodes. Example ANN 300 may comprise an input layer 310, hidden layers 320, 330, 340, and an output layer 350. Each layer of the ANN 300 may comprise one or more nodes, such as a node 305 or a node 315. In particular embodiments, each node of an ANN may be connected to another node of the ANN. As an example and not by way of limitation, each node of the input layer 310 may be connected to one of more nodes of the hidden layer 320. In particular embodiments, one or more nodes may be a bias node (e.g., a node in a layer that is not connected to and does not receive input from any node in a previous layer). In particular embodiments, each node in each layer may be connected to one or more nodes of a previous or subsequent layer. Although FIG. 3 depicts a particular ANN with a particular number of layers, a particular number of nodes, and particular connections between nodes, this disclosure contemplates any suitable ANN with any suitable number of layers, any suitable number of nodes, and any suitable connections between nodes. As an example and not by way of limitation, although FIG. 3 depicts a connection between each node of the input layer 310 and each node of the hidden layer 320, one or more nodes of the input layer 310 may not be connected to one or more nodes of the hidden layer 320.

In particular embodiments, an ANN may be a feedforward ANN (e.g., an ANN with no cycles or loops where communication between nodes flows in one direction beginning with the input layer and proceeding to successive layers). As an example and not by way of limitation, the input to each node of the hidden layer 320 may comprise the output of one or more nodes of the input layer 310. As another example and not by way of limitation, the input to each node of the output layer 350 may comprise the output of one or more nodes of the hidden layer 340. In particular embodiments, an ANN may be a deep neural network (e.g., a neural network comprising at least two hidden layers). In particular embodiments, an ANN may be a deep residual network. A deep residual network may be a feedforward ANN comprising hidden layers organized into residual blocks. The input into each residual block after the first residual block may be a function of the output of the previous residual block and the input of the previous residual block. As an example and not by way of limitation, the input into residual block $N$ may be $F(x) + x$, where $F(x)$ may be the output of residual block $N$ - 1, $x$ may be the input into residual block $N$ - 1. Although this disclosure describes a particular ANN, this disclosure contemplates any suitable ANN.

In particular embodiments, an activation function may correspond to each node of an ANN. An activation function of a node may define the output of a node for a given input. In particular embodiments, an input to a node may comprise a set of inputs. As an example and not by way of limitation, an activation function may be an identity function, a binary step function, a logistic function, or any other suitable function. As another example and not by way of limitation, an activation function for a node $k$ may be the sigmoid function $F_k(s_k) = \frac{1}{1+e^{-s_k}}$, the hyperbolic tangent function $F_k(s_k) = \frac{e^{s_k}-e^{-s_k}}{e^{s_k}+e^{-s_k}}$, the rectifier $F_k(s_k) = \max(0, s_k)$, or any other suitable function $F_k(s_k)$, where $s_k$ may be the effective input to node $k$. In particular embodiments, the input of an activation function corresponding to a node may be weighted. Each node may generate output using a corresponding activation function based on weighted inputs. In particular embodiments, each connection between nodes may be associated with a weight. As an example and not by way of limitation, a connection 325 between the node 305 and the node 315 may have a weighting coefficient of 0.4, which may indicate that 0.4 multiplied by the output of the node 305 is used as an input to the node 315. As another example and not by way of limitation, the output $y_k$ of node $k$ may be $y_k = F_k(s_k)$, where $F_k$ may be the activation function corresponding to node $k$, $s_k = \sum_j\{w_{jk}x_j\}$ may be the effective input to node $k$, $x_j$ may be the output of a node $j$ connected to node $k$, and $w_{jk}$ may be the weighting coefficient between *node j* and node k. In particular embodiments, the input to nodes of the input layer may be based on a vector representing an object. Although this disclosure describes particular inputs to and outputs of nodes, this disclosure contemplates any suitable inputs to and outputs of nodes. Moreover, although this disclosure may describe particular connections and weights between nodes, this disclosure contemplates any suitable connections and weights between nodes.

In particular embodiments, an ANN may be trained using training data. As an example and not by way of limitation, training data may comprise inputs to the ANN 300 and an expected output. As another example and not by way of limitation, training data may comprise vectors each representing a training object and an expected label for each training object. In particular embodiments, training an ANN may comprise modifying the weights associated with the connections between nodes of the ANN by optimizing an objective function. As an example and not by way of limitation, a training method may be used (e.g., the conjugate gradient method, the gradient descent method, the stochastic gradient descent) to backpropagate the sum-of-squares error measured as a distances between each vector representing a training object (e.g., using a cost function that minimizes the sum-of-squares error). In particular embodiments, an ANN may be trained using a dropout technique. As an example and not by way of limitation, one or more nodes may be temporarily omitted (e.g., receive no input and generate no output) while training. For each training object, one or more nodes of the ANN may have some probability of being omitted. The nodes that are omitted for a particular training object may be different than the nodes omitted for other training objects (e.g., the nodes may be temporarily omitted on an object-by-object basis). Although this disclosure describes training an ANN in a particular manner, this disclosure contemplates training an ANN in any suitable manner.

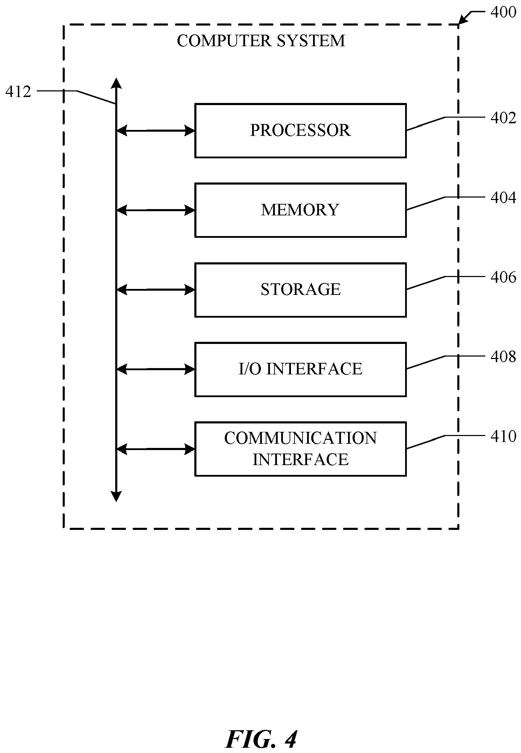

FIG. 4 illustrates an example computer system 400. In particular embodiments, one or more computer systems 400 perform one or more steps of one or more methods described or illustrated herein. In particular embodiments, one or more computer systems 400 provide functionality described or illustrated herein. In particular embodiments, software running on one or more computer systems 400 performs one or more steps of one or more methods described or illustrated herein or provides functionality described or illustrated herein. Particular embodiments include one or more portions of one or more computer systems 400. Herein, reference to a computer system may encompass a computing device, and vice versa, where appropriate. Moreover, reference to a computer system may encompass one or more computer systems, where appropriate.

This disclosure contemplates any suitable number of computer systems 400. This disclosure contemplates computer system 400 taking any suitable physical form. As example and not by way of limitation, computer system 400 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 400 may include one or more computer systems 400; be unitary or distributed; span multiple locations; span multiple machines; span multiple data centers; or reside in a cloud, which may include one or more cloud components in one or more networks. Where appropriate, one or more computer systems 400 may perform without substantial spatial or temporal limitation one or more steps of one or more methods described or illustrated herein. As an example and not by way of limitation, one or more computer systems 400 may perform in real time or in batch mode one or more steps of one or more methods described or illustrated herein. One or more computer systems 400 may perform at different times or at different locations one or more steps of one or more methods described or illustrated herein, where appropriate.

In particular embodiments, computer system 400 includes a processor 402, memory 404, storage 406, an input/output (I/O) interface 408, a communication interface 410, and a bus 412. Although this disclosure describes and illustrates a particular computer system having a particular number of particular components in a particular arrangement, this disclosure contemplates any suitable computer system having any suitable number of any suitable components in any suitable arrangement.

In particular embodiments, processor 402 includes hardware for executing instructions, such as those making up a computer program. As an example and not by way of limitation, to execute instructions, processor 402 may retrieve (or fetch) the instructions from an internal register, an internal cache, memory 404, or storage 406; decode and execute them; and then write one or more results to an internal register, an internal cache, memory 404, or storage 406. In particular embodiments, processor 402 may include one or more internal caches for data, instructions, or addresses. This disclosure contemplates processor 402 including any suitable number of any suitable internal caches, where appropriate. As an example and not by way of limitation, processor 402 may include one or more instruction caches, one or more data caches, and one or more translation lookaside buffers (TLBs). Instructions in the instruction caches may be copies of instructions in memory 404 or storage 406, and the instruction caches may speed up retrieval of those instructions by processor 402. Data in the data caches may be copies of data in memory 404 or storage 406 for instructions executing at processor 402 to operate on; the results of previous instructions executed at processor 402 for access by subsequent instructions executing at processor 402 or for writing to memory 404 or storage 406; or other suitable data. The data caches may speed up read or write operations by processor 402. The TLBs may speed up virtual-address translation for processor 402. In particular embodiments, processor 402 may include one or more internal registers for data, instructions, or addresses. This disclosure contemplates processor 402 including any suitable number of any suitable internal registers, where appropriate. Where appropriate, processor 402 may include one or more arithmetic logic units (ALUs); be a multi-core processor; or include one or more processors 402. Although this disclosure describes and illustrates a particular processor, this disclosure contemplates any suitable processor.

In particular embodiments, memory 404 includes main memory for storing instructions for processor 402 to execute or data for processor 402 to operate on. As an example and not by way of limitation, computer system 400 may load instructions from storage 406 or another source (such as, for example, another computer system 400) to memory 404. Processor 402 may then load the instructions from memory 404 to an internal register or internal cache. To execute the instructions, processor 402 may retrieve the instructions from the internal register or internal cache and decode them. During or after execution of the instructions, processor 402 may write one or more results (which may be intermediate or final results) to the internal register or internal cache. Processor 402 may then write one or more of those results to memory 404. In particular embodiments, processor 402 executes only instructions in one or more internal registers or internal caches or in memory 404 (as opposed to storage 406 or elsewhere) and operates only on data in one or more internal registers or internal caches or in memory 404 (as opposed to storage 406 or elsewhere). One or more memory buses (which may each include an address bus and a data bus) may couple processor 402 to memory 404. Bus 412 may include one or more memory buses, as described below. In particular embodiments, one or more memory management units (MMUs) reside between processor 402 and memory 404 and facilitate accesses to memory 404 requested by processor 402. In particular embodiments, memory 404 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 404 may include one or more memories 404, where appropriate. Although this disclosure describes and illustrates particular memory, this disclosure contemplates any suitable memory.

In particular embodiments, storage 406 includes mass storage for data or instructions. As an example and not by way of limitation, storage 406 may include a hard disk drive (HDD), a floppy disk drive, flash memory, an optical disc, a magneto-optical disc, magnetic tape, or a Universal Serial Bus (USB) drive or a combination of two or more of these. Storage 406 may include removable or non-removable (or fixed) media, where appropriate. Storage 406 may be internal or external to computer system 400, where appropriate. In particular embodiments, storage 406 is non-volatile, solid-state memory. In particular embodiments, storage 406 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 406 taking any suitable physical form. Storage 406 may include one or more storage control units facilitating communication between processor 402 and storage 406, where appropriate. Where appropriate, storage 406 may include one or more storages 406. Although this disclosure describes and illustrates particular storage, this disclosure contemplates any suitable storage.

In particular embodiments, I/O interface 408 includes hardware, software, or both, providing one or more interfaces for communication between computer system 400 and one or more I/O devices. Computer system 400 may include one or more of these I/O devices, where appropriate. One or more of these I/O devices may enable communication between a person and computer system 400. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 408 for them. Where appropriate, I/O interface 408 may include one or more device or software drivers enabling processor 402 to drive one or more of these I/O devices. I/O interface 408 may include one or more I/O interfaces 408, where appropriate. Although this disclosure describes and illustrates a particular I/O interface, this disclosure contemplates any suitable I/O interface.

In particular embodiments, communication interface 410 includes hardware, software, or both providing one or more interfaces for communication (such as, for example, packet-based communication) between computer system 400 and one or more other computer systems 400 or one or more networks. As an example and not by way of limitation, communication interface 410 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 410 for it. As an example and not by way of limitation, computer system 400 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 400 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 400 may include any suitable communication interface 410 for any of these networks, where appropriate. Communication interface 410 may include one or more communication interfaces 410, where appropriate. Although this disclosure describes and illustrates a particular communication interface, this disclosure contemplates any suitable communication interface.

In particular embodiments, bus 412 includes hardware, software, or both coupling components of computer system 400 to each other. As an example and not by way of limitation, bus 412 may include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 412 may include one or more buses 412, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

**Claims**

1. A method comprising, by one or more computing systems:

   receiving an input for a machine-learning model configured to detect a plurality of predetermined features, the machine-learning model comprising at least a first neural network configured to detect a first subset of the plurality of predetermined features and a second neural network configured to detect a second subset of the plurality of predetermined features;
   generating a detection result by processing the input using the first neural network;
   determining, based on the detection result and one or more detection criteria, that the input includes a feature in the first subset of the plurality of predetermined features; and
   in response to the determination, outputting the detection result as an output of the machine-learning model without using the second neural network to process the input.

2. The method of Claim 1, wherein a complexity associated with the second neural network is higher than a complexity associated with the first neural network.

3. The method of Claim 1, wherein the input comprises one or more of a text, an audio clip, an image, or a video clip.

4. The method of Claim 1, wherein each of the plurality of predetermined features comprises one or more of a class, a segmentation, or a bounding box.

5. The method of Claim 1, wherein the first subset of features of the plurality of predetermined features are associated with:

   a first set of classes, and wherein the second subset of the plurality of predetermined features are associated with a second set of classes; or
   a first set of segmentations, and wherein the second subset of the plurality of predetermined features are associated with a second set of segmentations; or
a first set of bounding boxes, and wherein the second subset of the plurality of predetermined features are associated with a second set of bounding boxes.

6. The method of Claim 1, wherein the detection result comprises one or more confidence scores associated with the plurality of predetermined features.

7. The method of Claim 6, further comprising ranking the one or more confidence scores, wherein the one or more detection criteria are based on a comparison of a top-ranked confidence score of the one or more confidence scores and a predetermined threshold score, or on a comparison of a top-ranked confidence score and at least a second-ranked confidence score.

8. The method of Claim 6, further comprising generating one or more intermediate embeddings of the input by processing the input using the first neural network, wherein determining that the input includes the feature in the first subset of the plurality of predetermined features is further based on another machine-learning model configured to process one or more of the one or more confidence scores or the one or more intermediate embeddings.

9. The method of Claim 1, wherein the first subset of the plurality of predetermined features have a higher probability of being included in inputs of the machine-learning model than the second subset of the plurality of predetermined features.

10. The method of Claim 1, further comprising training the machine-learning model, wherein the training comprises:

 accessing a plurality of training data associated with the plurality of predetermined features;
 dividing the plurality of training data into two or more sets of training data based on the plurality of predetermined features; and
 training a plurality of neural networks comprising at least the first neural network and the second neural network based on the two or more of sets of training data.

11. The method of Claim 10, wherein dividing the plurality of training data comprises clustering the plurality of training data into the two or more sets of training data based on similarity between the plurality of training data, or wherein dividing the plurality of training data is based on detection-capability associated with the plurality of predetermined features.

12. The method of Claim 10, wherein dividing the plurality of training data comprises:

 determining detection-hierarchy of the plurality of predetermined features; and
 dividing the plurality of training data into the two or more sets of training data based on the detection-hierarchy.

13. One or more computer-readable non-transitory storage media embodying software that is operable when executed to perform the method of any of claims 1 to 12 or to:

 receive an input for a machine-learning model configured to detect a plurality of predetermined features, the machine-learning model comprising at least a first neural network configured to detect a first subset of the plurality of predetermined features and a second neural network configured to detect a second subset of the plurality of predetermined features;
 generate a detection result by processing the input using the first neural network;
 determine, based on the detection result and one or more detection criteria, that the input includes a feature in the first subset of the plurality of predetermined features; and
 in response to the determination, output the detection result as an output of the machine-learning model without using the second neural network to process the input.

14. A system comprising: one or more processors; and a non-transitory memory coupled to the processors comprising instructions executable by the processors, the processors operable when executing the instructions to perform the method of any of claims 1 to 12 or to:

 receive an input for a machine-learning model configured to detect a plurality of predetermined features, the machine-learning model comprising at least a first neural network configured to detect a first subset of the plurality of predetermined features and a second neural network configured to detect a second subset of the plurality of predetermined features;
 generate a detection result by processing the input using the first neural network;
 determine, based on the detection result and one or more detection criteria, that the input includes a feature in the first subset of the plurality of predetermined features; and
 in response to the determination, output the detection result as an output of the machine-learning model without using the second neural network to process the input.

**EP 3 975 059 A1**

15. A computer program comprising instructions which, when the program is executed by a computer, cause the computer to carry out the method of any of claims 1 to 12.

**100**

*FIG. 1*

<u>200</u>

210 ⌐
┌─────────────────────────────────────────────────────────────────────────┐
│ Receive an input for a machine-learning model configured to detect a plurality of │
│ predetermined features, the machine-learning model comprising at least a first neural │
│ network configured to detect a first subset of the plurality of predetermined features and a │
│ second neural network configured to detect a second subset of the plurality of │
│ predetermined features │
└─────────────────────────────────────────────────────────────────────────┘

220 ⌐
┌─────────────────────────────────────────────────────────────────────────┐
│ Generate a detection result by processing the input using the first neural network │
└─────────────────────────────────────────────────────────────────────────┘

230 ⌐
┌─────────────────────────────────────────────────────────────────────────┐
│ Determine, based on the detection result and one or more detection criteria, that the input │
│ includes a feature in the first subset of the plurality of predetermined features │
└─────────────────────────────────────────────────────────────────────────┘

240 ⌐
┌─────────────────────────────────────────────────────────────────────────┐
│ In response to the determination, output the detection result as an output of the machine- │
│ learning model without using the second neural network to process the input │
└─────────────────────────────────────────────────────────────────────────┘

*FIG. 2*

**FIG. 3**

EP 3 975 059 A1

COMPUTER SYSTEM — 400

412

PROCESSOR — 402

MEMORY — 404

STORAGE — 406

I/O INTERFACE — 408

COMMUNICATION INTERFACE — 410

*FIG. 4*

**EUROPEAN SEARCH REPORT**

Europäisches Patentamt
European Patent Office
Office européen des brevets

Application Number

EP 21 19 6471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK EUNHYEOK ET AL: "Big/little deep neural network for ultra low power inference", 2015 INTERNATIONAL CONFERENCE ON HARDWARE/SOFTWARE CODESIGN AND SYSTEM SYNTHESIS (CODES+ISSS), IEEE, 4 October 2015 (2015-10-04), pages 124-132, XP032813440, DOI: 10.1109/CODESISSS.2015.7331375 [retrieved on 2015-11-17] * abstract * * page 124, left-hand column, line 1 – page 129, right-hand column, last line * ----- | 1-15 | INV. G06N3/04 G06N3/08 G06N5/00 |
| A | Wang Xin ET AL: "IDK Cascades: Fast Deep Learning by Learning not to Overthink", , 27 June 2018 (2018-06-27), pages 1-11, XP055887808, Retrieved from the Internet: URL:https://arxiv.org/pdf/1706.00885.pdf [retrieved on 2022-02-04] * abstract * * page 1, left-hand column, line 1 – page 5, right-hand column, last line * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 9 February 2022 | Totir, Felix |

page 1 of 2

Europäisches Patentamt

European Patent Office

Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALAM KAZI MD ROKIBUL ET AL: "A dynamic ensemble learning algorithm for neural networks", NEURAL COMPUTING AND APPLICATIONS, SPRINGER LONDON, LONDON, vol. 32, no. 12, 29 July 2019 (2019-07-29), pages 8675-8690, XP037169481, ISSN: 0941-0643, DOI: 10.1007/S00521-019-04359-7 [retrieved on 2019-07-29] * abstract; figures 1-2 * * page 8675, left-hand column, line 1 – page 8679, right-hand column, last line * ----- | 1-15 | |
| X,P | YIZENG HAN ET AL: "Dynamic Neural Networks: A Survey", ARXIV.ORG, CORNELL UNIVERSITY LIBRARY, 201 OLIN LIBRARY CORNELL UNIVERSITY ITHACA, NY 14853, 11 June 2021 (2021-06-11), XP081978521, * abstract * * page 1, left-hand column, line 1 – page 14, left-hand column, line 15 * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 9 February 2022 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)